# EUROPEAN PATENT APPLICATION

(11) **EP 3 588 996 A1**
(43) Date of publication of application: **01.01.2020**
(21) Application number: 18180828.8
(22) Date of filing: 29.06.2018
(51) Int. Cl.: H04W 8/00, H04L 29/12, H04L 29/08

(54) **A METHOD AND A SYSTEM FOR DISCOVERING COMPATIBLE DEVICES IN A LOCAL NETWORK**

(71) Applicant: Advanced Digital Broadcast S.A., 1262 Eysins (CH)
(72) Inventor: Stolcenburg, Adam, 65-119 Zielona Gora (PL)
(74) Representative: Kancelaria Eupatent.pl Sp. z.o.o

(57) **Abstract**

A computer-implemented method for discovering compatible devices (121-126) in a local network (131-133) comprising a plurality of devices (121-126) communicating with an external network via a NAT server (141-144). The method comprises, at a discovery server (110) remote to the local network (131-133): receiving, from a plurality of discovering devices (121-126) communicating via the NAT servers, a discovery request message comprising local IP addresses of the discovering device (121-126) and storing the received local IP addresses in a database along with a NAT server IP address from which the discovery request originated; sending (212, 214) a list of candidate devices to the discovering device (121-126), wherein the list of candidate devices comprises a list of local IP addresses of the discovering devices (121-126) that have previously sent a discovery request message via the NAT server having the same IP address as the current discovering device (121-126). Furthermore, the method comprises, at the discovering device (121-126), after sending (301) the discovery request message: receiving (302) the list of candidate devices; performing (222, 306) a connection attempt to peer devices by sending a connection attempt message to each of the local IP addresses comprised in the list of candidate devices, wherein the connection attempt message comprises the local IP address of the discovering device; awaiting (232, 307) a connection confirmation message from the peer device; upon receiving (308) the connection confirmation message, classifying the peer device as a compatible device within the same local network.

## Description

### TECHNICAL FIELD

The present disclosure relates to a method and a system for discovering compatible devices in a local network.

### BACKGROUND

Devices that operate in the same network may have their individual functionality improved by operating together, for example to perform some tasks in common or to share their resources among each other. In order to do so, the devices must be: (a) compatible, i.e. able to operate according to a common scheme or to communicate with each other and (b) know about each other's existence in the network.

One of methods for discovering devices in a local network is based on an SSDP (Simple Service Discovery Protocol) protocol, which is one of the protocols used by an UPnP (Universal Plug and Play) discovery, which is a subset of a DLNA (Digital Living Network Alliance) protocol. The SSDP uses multicast packets to notify about presence of a device, as well as to request discovery of other devices. In multicast communication, data transmission is addressed to a group of destination devices/computers simultaneously.

Some routers by default disable passing of multicast packets between their LAN (Local Area Network) ports, which make the SSDP discovery process unusable until a user specifically configures the router to enable this feature. However, the multicast communication is considered to be unreliable, due to the use of UDP (User Datagram Protocol) transmission, in which messages may be lost or delivered out of order.

There are known methods to manipulate the SSDP discovery to discover not only devices from a local network, but also devices placed anywhere else. For example, a US patent application US20030063608A1 presents a method for discovering devices (bridging a plurality of multicast domains) by tunnelling of multicast traffic in a unicast connection. A search message or an announcement message on a multicast channel in one domain gets encapsulated into a unicast message that is sent to a second domain. The multicast message is extracted from the unicast message in the second domain and is input to the second domain multicast channel. However, this means that the SSDP discovery method cannot be used as means to ensure that a peer device is in fact in the same local network.

Therefore, there is a need to provide an alternative method for discovering compatible devices belonging to the same local network, such as a home network.

### SUMMARY

There is disclosed a computer-implemented method for discovering compatible devices in a local network comprising a plurality of devices communicating with an external network via a NAT (Network Address Translation) server. The method comprises, at a discovery server remote to the local network: receiving, from a plurality of discovering devices communicating via the NAT servers, a discovery request message comprising local IP (Internet Protocol) addresses of the discovering device and storing the received local IP addresses in a database along with a NAT server IP address from which the discovery request originated; sending a list of candidate devices to the discovering device, wherein the list of candidate devices comprises a list of local IP addresses of the discovering devices that have previously sent a discovery request message via the NAT server having the same IP address as the current discovering device. Furthermore, the method comprises, at the discovering device, after sending the discovery request message: receiving the list of candidate devices; performing a connection attempt to peer devices by sending a connection attempt message to each of the local IP addresses comprised in the list of candidate devices, wherein the connection attempt message comprises the local IP address of the discovering device; awaiting a connection confirmation message from the peer device; upon receiving the connection confirmation message, classifying the peer device as a compatible device within the same local network.

The method may further comprise, at the discovering device, monitoring whether the local network parameters have changed and if so, sending another discovery request message.

There is also disclosed a computer program comprising program code means for performing all the steps of the computer-implemented method as described above when said program is run on a computer, as well as a computer readable medium storing computer-executable instructions performing all the steps of the computer-implemented method as described above when executed on a computer.

There is also disclosed a networking system that enables discovering compatible devices in a local network comprising a plurality of devices communicating with an external network via a NAT server. The system comprises a discovery server remote to the local network and configured to: receive, from a plurality of discovering devices communicating via the NAT servers, a discovery request message comprising a local IP address of the discovering device and storing the received local IP addresses in a database along with a NAT server IP address from which the discovery request originated; send a list of candidate devices to the discovering device, wherein the list of candidate devices comprises a list of local IP addresses of the discovering devices that have previously sent a discovery request message via the NAT server having the same IP address as the current discovering device. The discovering device, after sending the discovery request message, is configured to: receive the list of candidate devices; perform a connection attempt to peer devices by sending a connection attempt message to each of the local IP addresses comprised in the list of candidate devices, wherein the connection attempt message comprises the local IP address of the discovering device; await a connection confirmation message from the peer device; upon receiving the connection confirmation message, classify the peer device as a compatible device within the same local network.

The discovering device may be further configured to monitor whether the local network parameters have changed and if so, send another discovery request message.

### BRIEF DESCRIPTION OF DRAWINGS

The method presented herein is presented by means of example embodiments on a drawing, wherein:
Fig. 1 presents an exemplary network environment for performing a method or discovering compatible devices;
Fig. 2 presents steps of the method for discovering compatible devices;
Fig. 3 presents a flowchart of a discovery process from a discovering device perspective;
Fig. 4 presents a flowchart of the discovery process from a discovered device perspective.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DETAILED DESCRIPTION

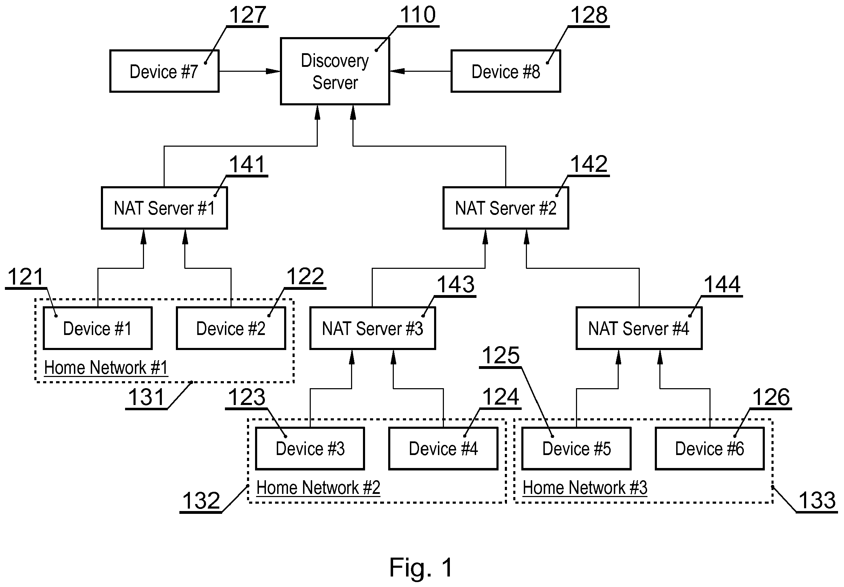

Fig. 1 presents an example of an environment wherein the method disclosed herein can be performed. Devices 121-126, which are connected to local networks 131, 132, 133, such as home networks, are typically also connected to another network (WAN - Wide Area Network) through a NAT server 141-144. The devices 121-126 have their own IP addresses in the local network from the LAN (Local Area Network) domain, based on which they may communicate with each other. When the devices communicate with devices which are not part of the LAN, the traffic is routed through a NAT server 141-144 which changes the source IP address of the routed packets by replacing the IP address from the LAN domain to an IP address from the WAN domain. Because of that, a device which receives connection initiated by a local network device from the WAN domain does not see the local IP address, but instead sees the IP address of the last NAT server on the connection path. For example, a device 127, 128 that is connected to the same WAN as a discovery server 110, when receiving a connection initiated by the device 123, may see the IP address of the NAT server 142 instead of the LAN IP address of the device 123.

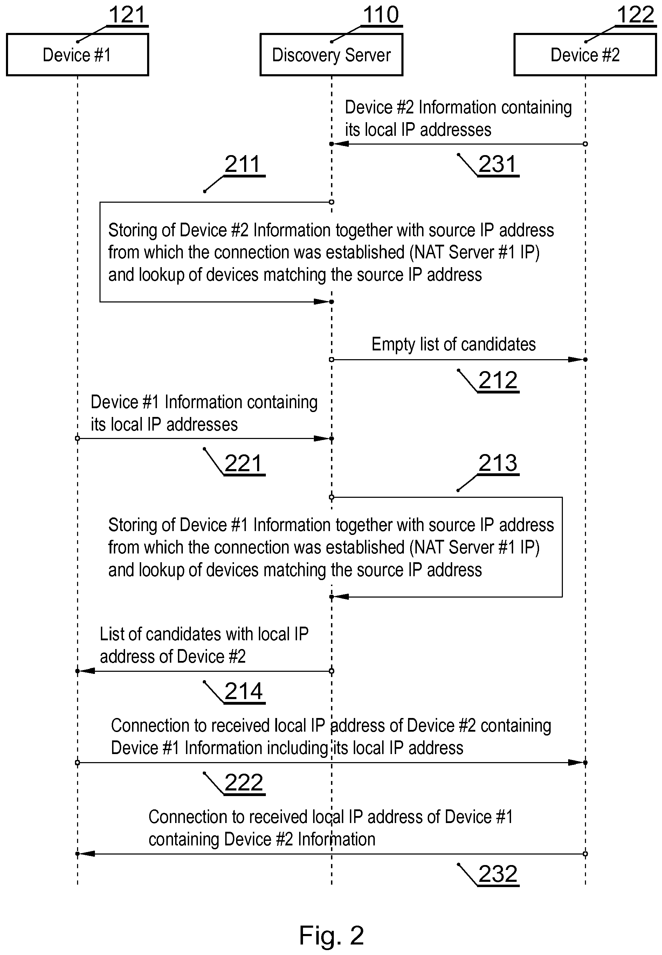

Fig. 2 presents steps of the method for discovering compatible devices. Upon powering on (and preferably also after each change of LAN parameters), the devices connect (communicate) to the discovery server 110 and send a discovery request message, including device-specific information (that allows the device to be recognized), including the IP address of their active network interface.
Therefore, in step 231, the discovery request message is sent from a discovering device to the discovery server 110. In step 211, the information contained in the message, in particular the source IP address of the discovering device that sent the message, is stored by the discovery server 110 in a database (comprising the received IP address of the device, which is the device local IP addresses, as well as a public IP address which is the source IP address from which the connection was established). The source IP address is usually the same as the IP address of the last NAT server 141 on a connection path. In step 211 it is also checked if there are any devices matching the source IP address. The matching devices are devices that have the same public IP address as the device which sent the inquiry (in the presented example - the device 122). If there are no matching devices, then in step 212, an empty list of candidate devices is sent to the device 122. Next, in step 221, another discovering device 121 sends a discovery request message, containing its local IP address, to the discovery server 110. In step 213, the received information concerning the device 121, together with the source IP address from which the connection was established (the IP address of the NAT server 141), are stored by the discovery server and it is checked if there are any devices matching the source IP address of the device 121. In step 214, a list of candidate devices with local IP address of the device 122 is sent to the device 121. In step 222, the discovering device 121 that received the list of candidates performs a connection attempt to the received local IP address of the device 122, sending a connection attempt message containing the device 121 specific information including its local IP address. In step 232, the device 122 that received the connection attempt message, performs a connection attempt to the IP address received in the connection attempt message and sends a connection confirmation message to the device 121 containing the device 122 specific information, including its local IP address. If the devices 121, 122 are able to establish communication with each other, it is an indication that they are in the same local network 131.

Therefore, in general, the discovery server 110, upon receiving from a discovering device a message with new device-specific information, updates the list of candidate devices by adding that new device-specific information to the list.

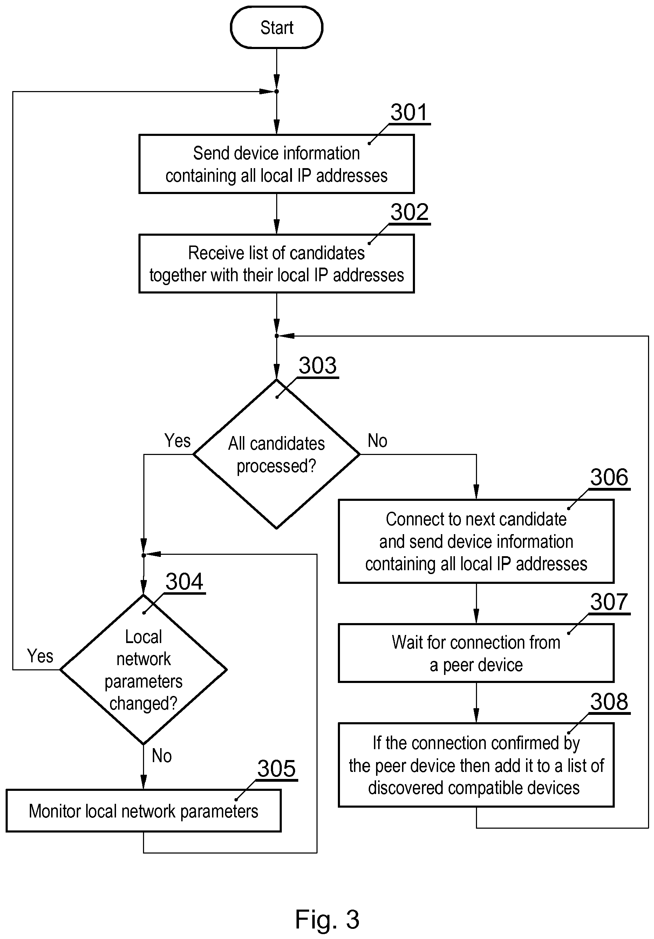

Fig. 3 presents a flowchart of a discovery process from a discovering device perspective. In step 301 the device information, including the local IP addresses, is sent to the discovery server 110 as a discovery request message. Next, in step 302, a list of candidate devices (i.e. the devices which are possibly located in the same local network, for example the devices that have the same public IP address), together with their local IP addresses, is sent back from the discovery server 110 and received by the discovering device (i.e. the device which establishes the connection). In step 303 the discovering device checks if all candidates from the list have been processed (if a connection attempt was performed to the specific candidate device) by the discovering device. If not, then in step 306, a connection attempt to a next candidate device from the list is performed by the discovering device by sending a connection attempt message including its local IP address. In step 307, a connection from a peer device (i.e. the device, to which the information was send in step 306) is awaited by the discovering device and if the connection confirmed by the peer device sending back the connection confirmation message, then the peer device is added to a list of discovered compatible devices in step 308. The discovered devices belong to the same local network. Owing to the fact that the devices located behind different NAT servers are not able to establish direct connection between each other (for example devices located behind the NAT server 143 are not able to communicate directly to the devices located behind the NAT server 144), it is possible to determine which devices belong to the same local network and to determine a final list of available local networks with groups of devices.

Next, the process loops back to step 303. If, in step 303, all candidate devices have been processed, the process continues to step 304, in which it is checked if the local network parameters have changed. If not, then the process loops back to step 301. Otherwise, it continues to step 305, in which the local network parameters are monitored. Next the process loops back to step 304.

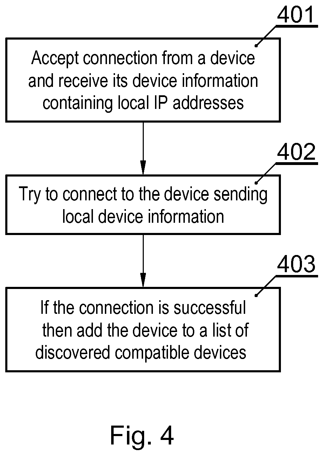

Fig. 4 presents a flowchart of the discovery process from a discovered device perspective. In step 401 a connection from the discovering device is accepted by a discovered device by receiving the connection attempt message with the discovering device information containing its local IP address. Next, in step 402, a connection attempt to the discovering device is performed by the peer device, by sending a connection confirmation message, including its local device information, and if the message successfully reaches the discovering device, then the discovering device knows that the peer device is a compatible device within the same local network and also the discovered device knows that the discovering device is also a compatible device placed within the same local network and in step 403 the device is added to its list of discovered compatible devices.

The presented method for discovering compatible devices in a local network allows to omit using of a problematic multicast communication and prevents manipulation of the discovery process by tunneling multicast traffic between local networks.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for discovering compatible devices in a local network may be performed and/or controlled by one or more computer programs. Such computer programs are typically executed by utilizing the computing resources in a computing device. Applications are stored on a non-transitory medium. An example of a non-transitory medium is a nonvolatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for discovering compatible devices (121-126) in a local network (131-133) comprising a plurality of devices (121-126) communicating with an external network via a NAT server (141-144), the method **characterized by** comprising the steps of:
- at a discovery server (110) remote to the local network (131-133):
- receiving, from a plurality of discovering devices (121-126) communicating via the NAT servers, a discovery request message comprising local IP addresses of the discovering device (121-126) and storing the received local IP addresses in a database along with a NAT server IP address from which the discovery request originated;
- sending (212, 214) a list of candidate devices to the discovering device (121-126), wherein the list of candidate devices comprises a list of local IP addresses of the discovering devices (121-126) that have previously sent a discovery request message via the NAT server having the same IP address as the current discovering device (121-126);
- at the discovering device (121-126), after sending (301) the discovery request message:
- receiving (302) the list of candidate devices;
performing (222, 306) a connection attempt to peer devices by sending a connection attempt message to each of the local IP addresses comprised in the list of candidate devices, wherein the connection attempt message comprises the local IP address of the discovering device;
awaiting (232, 307) a connection confirmation message from the peer device; upon receiving (308) the connection confirmation message, classifying the peer device as a compatible device within the same local network.

2. The method according to claim 1, further comprising at the discovering device (121-126), monitoring (304) whether the local network parameters have changed and if so, sending another discovery request message (301).

3. A computer program comprising program code means for performing all the steps of the computer-implemented method according to any of claims 1-2 when said program is run on a computer.

4. A computer readable medium storing computer-executable instructions performing all the steps of the computer-implemented method according to any of claims 1-2 when executed on a computer.

5. A networking system that enables discovering compatible devices (121-126) in a local network (131-133) comprising a plurality of devices (121-126) communicating with an external network via a NAT server (141-144), the system comprising:
- a discovery server (110) remote to the local network (131-133) and configured to:
receive, from a plurality of discovering devices (121-126) communicating via the NAT servers, a discovery request message comprising a local IP address of the discovering device (121-126) and storing the received local IP addresses in a database along with a NAT server IP address from which the discovery request originated;
send (212, 214) a list of candidate devices to the discovering device (121-126), wherein the list of candidate devices comprises a list of local IP addresses of the discovering devices (121-126) that have previously sent a discovery request message via the NAT server having the same IP address as the current discovering device (121-126);
- wherein the discovering device (121-126), after sending (301) the discovery request message, is configured to:
receive (302) the list of candidate devices;
perform (222, 306) a connection attempt to peer devices by sending a connection attempt message to each of the local IP addresses comprised in the list of candidate devices, wherein the connection attempt message comprises the local IP address of the discovering device;
await (232, 307) a connection confirmation message from the peer device;
upon receiving (308) the connection confirmation message, classify the peer device as a compatible device within the same local network.

6. The system according to claim 5, wherein the discovering device (121-126), is further configured to monitor (304) whether the local network parameters have changed and if so, send another discovery request message (301).
